# EUROPÄISCHE PATENTSCHRIFT

(11) **EP 0 604 881 B1**
(45) Veröffentlichungstag und Bekanntmachung des Hinweises auf die Patenterteilung: **12.11.1997**
(21) Anmeldenummer: 93120596.7
(22) Anmeldetag: 21.12.1993
(51) Int. Cl.: C08L 71/10, C08L 77/10, C08L 39/06, C08L 71/00

(54) **Homogene Polymerlegierungen auf der Basis von sulfonierten, aromatischen Polyetherketonen**
Homogeneous polymer alloy based on sulphonated aromatic polyetherketones
Alliage homogène de polymères à base de polyethercéthones aromatiques sulphonées

(30) Priorität: 30.12.1992 DE 4244526
(43) Veröffentlichungstag der Anmeldung: 06.07.1994
(73) Patentinhaber: HOECHST AKTIENGESELLSCHAFT, 65929 Frankfurt am Main (DE)
(72) Erfinder: Helmer-Metzmann, Freddy, Dr., D-55128 Mainz (DE); Herrmann-Schönherr, Otto, Dr., D-64625 Bensheim (DE); Kampschulte, Uwe, Dr., D-65795 Hattersheim (DE)

(56) Entgegenhaltungen:
- EP-A- 0 185 237
- EP-A- 0 337 626
- EP-A- 0 381 172
- EP-A- 0 407 821
- US-A- 3 745 141

## Beschreibung

Die Erfindung betrifft Polymerlegierungen, die in homogener Mischung als Hauptbestandteile sulfonierte, aromatische Polyetherketone sowie mindestens ein vollaromatisches Polyamid enthalten, ein Verfahren zur Herstellung der Legierungen und deren Verwendung.

Das Prinzip der Modifizierung von Werkstoffeigenschaften von Polymeren durch Herstellung von homogenen Polymerlegierungen ist bekannt. Auf diese Weise können technologisch wichtige Eigenschaften von Polymerwerkstoffen verbessert oder gezielt eingestellt werden, die oft auf eine andere Art und Weise, wie z.B. durch Copolymerisation, nicht oder nur schwierig realisierbar sind.

Eine Grundvoraussetzung für die Möglichkeit der Herstellung einer homogenen Polymerlegierung ist die vollständige Mischbarkeit der Legierungskomponenten. Die vollständige Mischbarkeit ist jedoch eine ungewöhnliche Eigenschaft von Polymer-Systemen, die normalerweise dazu tendieren, Mehrphasensysteme auszubilden (Polymer, Vol. 24, S. 60 (1983)).

Selbst moderne thermodynamische Theorien sind bis heute nur begrenzt erfolgreich, was die Vorhersage der Mischbarkeit betrifft. Es wurde daher bezweifelt, daß irgendeine praktische Theorie entwickelt werden kann, welche die realen Komplexitäten berücksichtigt, die die Natur den Polymer-Polymer-Wechselwirkungen verleiht (Macromolecules, Vol. 16, S. 753 (1983)).

Man ist deshalb bis heute weit davon entfernt, die Eigenschaften einer Legierung aus den Eigenschaften ihrer Einzelkomponenten gesichert vorhersagen zu können, so daß das Legieren von Polymeren noch weitgehend empirisch ist (Olabisi, Robeson, Shaw: Polymer-Polymer-Miscibility, Academic Press, New York 1979, S. 321-327). Insbesondere ist die homogene Mischbarkeit von Polymerlegierungen, die stark wechselwirkende Polymere enthalten, trotz einer sehr großen Zahl von experimentellen und theoretischen Arbeiten auf diesem Gebiet, nicht vorherzusagen (Journal of Polymer Science, Polymer Physics Edition, Vol. 21, S. 11 (1983)).

In der Technik besteht jedoch ein sehr großes Interesse an homogen gemischten Polymerlegierungen, da deren Eigenschaften durch Variation der Legierungskomponenten und deren Mischungsverhältnisse bestimmten Anforderungen gezielt angepaßt werden können.

Legierungen von aromatischen Polyamiden mit Poly-N-vinylpyrrolidon, die homogen gemischt sind, und die eine gezielte Einstellung von physikalischen und mechanischen Eigenschaften, wie Verbesserung der Verarbeitbarkeit und Wasseraufnahmefähigkeit, erlauben, werden in der EP-A-0 381 172 offenbart.

Sulfonierte Polyetherketone sind bereits bekannt. Sie lassen sich durch konventionelle Sulfonierungsverfahren herstellen (z.B. nach EP-A-008895, EP-A-041780), sind aber auch durch ein neues Verfahren zugänglich (deutsche Patentanmeldung P 4 219 077.0). Sie zeichnen sich insbesondere durch eine hohe Temperaturbeständigkeit, eine ausgezeichnete Hydrophilie und durch eine gute Löslichkeit in organischen Lösungsmitteln, wie N-Methylpyrrolidon oder N,N-Dimethylformamid, aus.

Sulfonierte Polyetherketone wurden bereits mit teilaliphatischen Polyamiden legiert (EP-A-0 337 626). Die mangelnde chemische Stabilität dieser Legierungen, insbesondere gegenüber polaren organischen Lösungsmitteln, ist jedoch insbesondere im Hinblick auf Anwendungen nachteilig, bei denen hydrophile Eigenschaften von Materialien bei gleichzeitiger Lösemittelstabilität gefordert werden. So wird beispielsweise von Fasern, um einen guten Tragekomfort von Geweben zu gewährleisten, das Erreichen einer bestimmten Wasseraufnahmefähigkeit verlangt. Auch im Hinblick auf eine Anwendung für "fouling-resistente" semipermeable Membranen, d.h. semipermeable Membranen mit einer geringen Verblockungsneigung, müssen die eingesetzten Materialien eine hinreichende Hydrophilie aufweisen.

Darüber hinaus ist es erforderlich, die mechanischen Eigenschaften einer Polymerlegierung dem jeweils gewünschten Anwendungsfeld anzupassen.

Dieser Erfindung lag deshalb die Aufgabe zugrunde, homogene Polymerlegierungen auf der Basis von sulfonierten Polyetherketonen und Polyamiden bereitzustellen, deren Wasseraufnahmefähigkeit und deren mechanische Eigenschaften durch Variation der Mischungskomponenten und/oder der Mischungsverhältnisse gezielt eingestellt werden können. Darüber hinaus sollten die neuen Systeme chemisch sowie thermisch beständig sein.

Gelöst wird diese Aufgabe durch die Bereitstellung von homogenen Polymerlegierungen, die als Hauptbestandteile sulfonierte, aromatische Polyetherketone und mindestens ein Polyamid enthalten und bei denen das Polyamid ein vollaromatisches Polyamid ist. Ein vollaromatisches Polyamid leitet sich formal ab von einer aromatischen Dicarbonsäure und einem aromatischen Diamin. Die erfindungsgemäße homogene Polymerlegierung kann neben sulfonierten, aromatischen Polyetherketon und vollaromatischem Polyamid in geringerem Maße noch weitere Polymere enthalten. Die erfindungsgemäßen Legierungen sind vorzugsweise frei von teilaliphatischen Polyamiden gemäß EP-A-337 626.
Nach einer Ausgestaltung der Erfindung besteht die Polymerlegierung aus mindestens einem sulfonierten, aromatischen Polyetherketon und mindestens einem vollaromatischen Polyamid.
Neben dem sulfonierten, aromatischen Polyetherketon und dem vollaromatischen Polyamid können - nach einer Ausgestaltung der Erfindung - noch geringere Mengen an Poly-N-vinyl-2-pyrrolidon vorhanden sein. Zusätzlich zu dem Poly-N-vinyl-2-pyrrolidon kann in der Polymerlegierung noch ein Copolymerisat enthalten sein, das aus den Monomeren N-Vinyl-2-pyrrolidon und Vinylacetat aufgebaut ist. Nach einer anderen Ausgestaltung der Erfindung ist in der Polymerlegierung neben dem sulfonierten, aromatischen Polyetherketon und dem vollaromatischen Polyamid noch ein Copolymerisat aus N-Vinyl-2-pyrrolidon und Vinylacetat vorhanden (aber kein Poly-N-vinyl-2-pyrrolidon).

Soweit die Polymerlegierung aus einem sulfonierten, aromatischen Polyetherketon und einem vollaromatischen Polyamid besteht, ist jede der beiden Bestandteile in einer Menge von 1 bis 99 Gew.-% vorhanden.

Soweit die Polymerlegierung noch Poly-N-vinyl-2-pyrrolidon und/oder ein Copolymerisat aus N-Vinyl-2-pyrrolidon und Vinylacetat enthält, ist es vorteilhaft, wenn der Anteil an sulfoniertem, aromatischen Polyetherketon 5 bis 60 Gew.-% und der Anteil des vollaromatischen Polyamids 20 bis 90 Gew.-% beträgt. Vorzugsweise beträgt der Anteil an Polyvinylpyrrolidon und/oder einem Copolymerisat aus N-Vinyl-2-pyrrolidon und Vinylacetat 0,1 bis 30 Gew.-%.

Es ist vorteilhaft, wenn die sulfonierten, aromatischen Polyetherketone aus Wiederholeinheiten der allgemeinen Formel I, 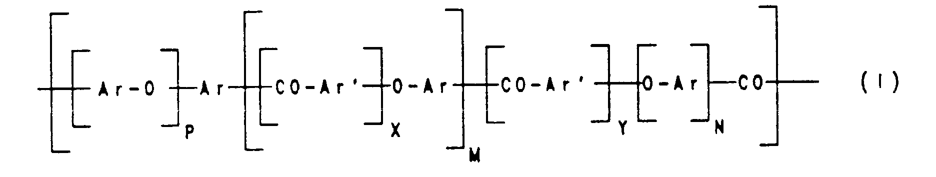 aufgebaut sind, wobei
- Ar: einen Phenylenring mit para- und/oder meta-Bindungen,
- Ar'-: einen Phenylen-, Naphthylen-, Biphenylen-, Anthrylen- oder eine andere zweiwertige aromatische Einheit,
- X, M und N: unabhängig voneinander Null oder 1,
- Y: Null, 1, 2 oder 3,
- p: 1, 2, 3 oder 4,
bedeuten, und wobei in der allgemeinen Formel I 20 bis 100 % der O-Phenylen-O-Einheiten mit einer SO₃H-Gruppe substituiert sind. Vorzugsweise werden in der allgemeinen Formel I die Indizes p, X und M so aufeinander abgestimmt, daß p = 2 - (1 - X) · M gilt.

Bevorzugt eingesetzt werden sulfonierte Polyetherketone der allgemeinen Formel II, 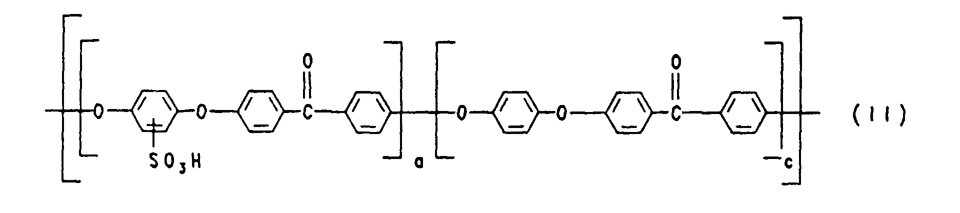 wobei a eine Zahl von 0,2 bis 1, c eine Zahl von 0 bis 0,8 bedeutet und die Summe a + c = 1 beträgt, der allgemeinen Formel III 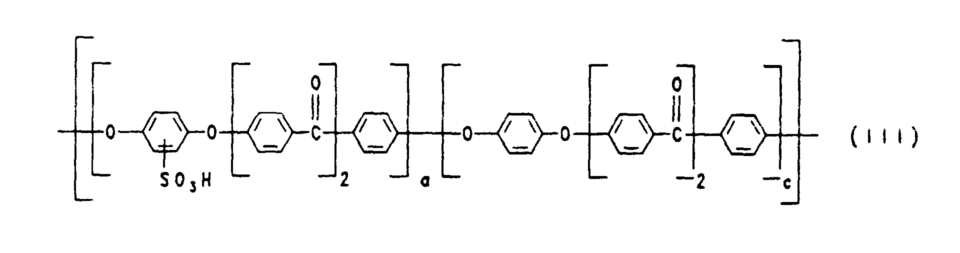 wobei a eine Zahl von 0,2 bis 1, c eine Zahl von 0 bis 0,8 bedeutet und die Summe a + c = 1 beträgt, und der allgemeinen Formel IV 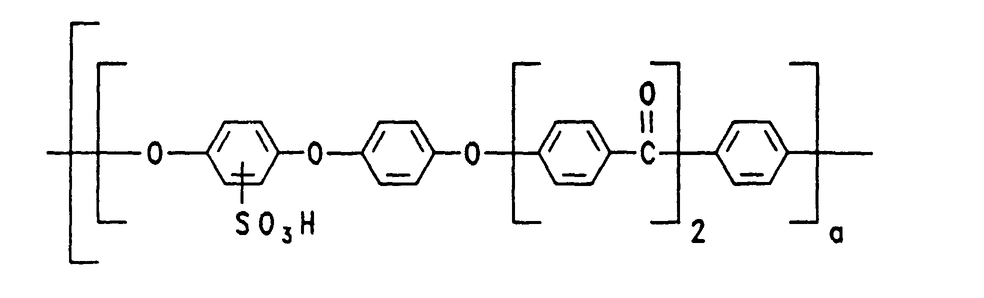 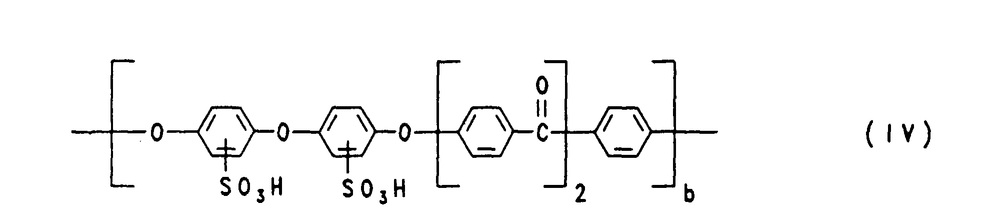 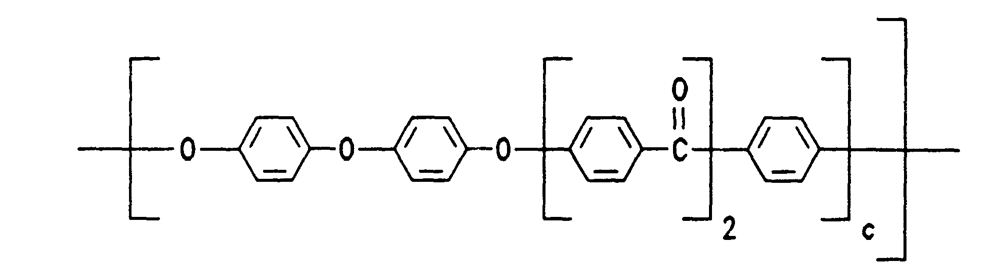 wobei a eine Zahl von 0 bis 1, b eine Zahl von 0 bis 1, c eine Zahl von 0 bis 0,5 bedeutet, und die Summe a + b + c = 1 beträgt.

Darüber hinaus können auch sulfonierte Polyetherketone eingesetzt werden, die aus mindestens zwei unterschiedlichen Wiederholeinheiten der allgemeinen Formeln II, III und IV zusammengesetzt sind.
Man kann sie herstellen durch Copolymerisation von Einheiten der allgemeinen Formel II, III, IV (jedoch frei von Sulfonsäuregruppen) und nachträglicher Sulfonierung des gewonnenen Copolymeren.

Die eingesetzten sulfonierten Polyetherketone besitzen vorzugsweise Molmassen, angegeben als Gewichtsmittel, im Bereich von 10 000 bis 60 000 g/mol, insbesondere im Bereich von 20 000 bis 30 000 g/mol.

Die Herstellung von sulfonierten Polyetherketonen kann nach einem üblichen Sulfonierungsverfahren erfolgen (z.B. EP-A0-008 895, EP-A0-041 780). Vorzugsweise wird nach dem in der deutschen Patentanmeldung P 4 219 077.0 beschriebenen Verfahren sulfoniert, auf die hiermit ausdrücklich Bezug genommen wird.

Die erfindungsgemäßen Polymerlegierungen enthalten als vollaromatisches Copolyamid vorzugsweise mindestens eines, das Struktureinheiten der allgemeinen Formel (V)

-HN-Ar²-Z¹-Ar³-(-Z²-Ar³-Z³-Ar²-)ₙ-NH-OC-Ar¹-CO- (V)

aufweist, wobei
- -Ar¹-: einen 1,4-Phenylen- oder einen anderen zweiwertigen (C₆-C₁₂)-aromatischen oder heteroaromatischen, gegebenenfalls Sulfonsäuregruppen oder Etherbrücken enthaltenden Rest, der gegebenenfalls mit einem oder zwei verzweigten oder unverzweigten C₁-C₄-Alkyl- oder Alkoxyresten oder mit einem oder mehreren Halogenatomen, beispielsweise Chlor, Fluor oder Brom substituiert ist, bedeutet,
- -Ar²- und -Ar³-: für gleiche oder verschiedene 1,2-Phenylen, 1,3-Phenylen- oder 1,4-Phenylenreste, die gegebenenfalls mit einem oder zwei verzweigten oder unverzweigten C₁-C₄-Alkyl- oder Alkoxyresten oder mit einem oder mehreren Halogenatomen, beispielsweise Chlor, Fluor oder Brom substituiert sind, stehen,
- -Z¹-, -Z²- und -Z³-: unabhängig voneinander eine direkte Bindung oder einen der folgenden zweiwertigen Reste -O-, -C(CH₃)₂-, -C(CF₃)₂-, -SO₂- oder -O-Ar²-O- bedeuten, wobei -Ar²- die vorstehend genannte Bedeutung hat, und
- n: eine ganze Zahl ist, insbesondere n = 0, 1 oder 2, ist.

Bevorzugt sind Copolyamide, der allgemeinen Formel V die die Struktureinheit

(A) -OC-Ar¹-CO-,

sowie drei verschiedene Struktureinheiten der Formeln

(B) -NH-Ar²-NH-

und

(D) -HN-Ar²-Z¹-Ar³-(-Z²-Ar³-Z³-Ar²-)ₙ-NH-

aufweisen, wobei jeweils mindestens eine Struktureinheit B und D vorhanden sein soll und Ar² in B und D eine unterschiedliche Bedeutung haben kann. Vorzugsweise ist dabei n = 0.

Beispiele für die Einheit -Ar¹- in der Wiederholungseinheiten A sind 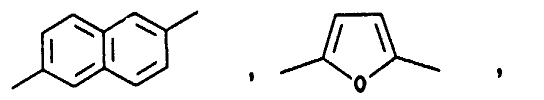 insbesondere

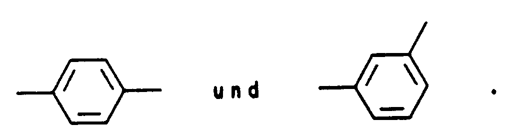

Beispiele für -Ar²- in den Wiederholungseinheiten B sind substituierte oder unsubstituierte p-Phenyleneinheiten, wie z.B. 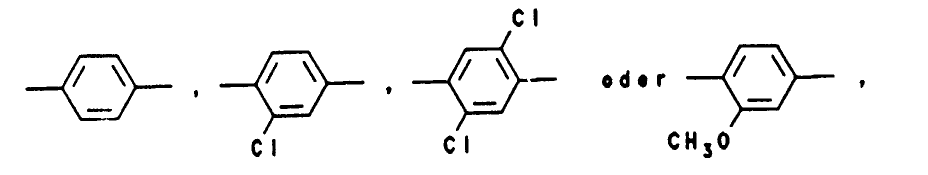 substituierte oder unsubstituierte m-Phenyleneinheiten, wie z.B.

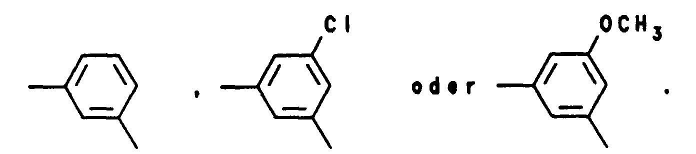

Beispiele für Ar²-Z¹-Ar³ in den Wiederholungseinheiten D sind 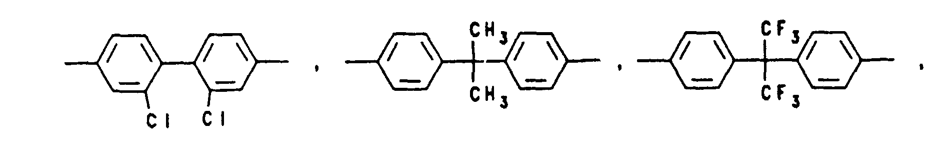 insbesondere

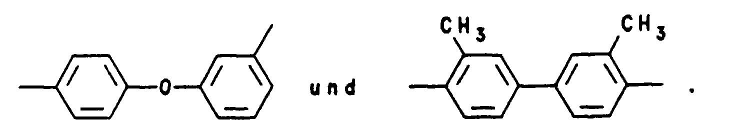

Besonders bevorzugt sind:

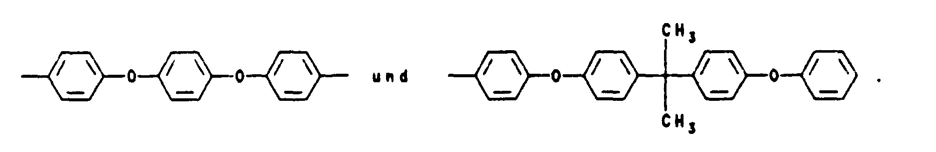

Vorzugsweise sind in dem vollaromatischen Copolyamid die Struktureinheiten A, B und D in den Molverhältnissen B/A = 0,3 - 0,9 und D/A = 0,1 - 0,7 vorhanden und das Molverhältnis (B+D)/A beträgt 0,9 bis 1,1.

Bei der Synthese der vollaromatischen Copolyaramide mit den Struktureinheiten A, B, und D werden die für die Struktureinheiten (B) und (D) erforderlichen eingesetzten Diamine B', B'', D' und D'' meist in den folgenden Konzentrationen eingesetzt:

| | |
|---|---|
| Diamin (B') | 0 bis 50 mol% |
| zweites Diamin (B'') | 0 bis 60 mol% |
| Diamine (D',D'') | 10 bis 70 mol% (pro Diamineinheit (D') oder (D'')), |

bezogen auf 100 mol% der eingesetzten Säurekomponente (A'), wobei das Molverhältnis der Diaminkomponenten zur Säurekomponente 0,90:1,10 bis 1,10:0,90, vorzugsweise 1:1, beträgt.

Die Herstellung der hier genannten Copolyamide kann erfolgen durch Lösungskondensation der aromatischen Disäurechloride mit den Mischungen der aromatischen Diamine, analog wie in den europäischen Patentschriften EP-A-0 199 090, EP-A-0 322 837, EP-A-0 445 673 und wie in den deutschen Patentanmeldungen P 41 04 394, P 41 21 801 und P 42 02 16 5.0 beschrieben, in aprotischen, polaren Lösungsmitteln vom Amidtyp, wie z.B. in N,N-Dimethylacetamid oder insbesondere in N-Methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegeben werden. Bevorzugte Zusätze sind Calciumchlorid und/oder Lithiumchlorid.

Die inhärente Viskosität, welche ein Maß für die mittlere Kettenlänge der entstandenen Polymere ist, liegt bei den als Legierungskomponenten verwendeten Copolyamiden vorzugsweise zwischen 50 und 1000 cm³/g, bevorzugt zwischen 100 und 500 cm³/g, besonders bevorzugt zwischen 150 und 350 cm³ /g. Sie wurde bestimmt an Lösungen von jeweils 0,5 g Polymer in 100 ml 96 %iger Schwefelsäure bei 25°C.

Die Molekulargewichte des Polyvinylpyrrolidons (= PVP) und des Copolyvinylpyrrolidon-polyvinylacetats (abgekürzt: CoPVPAc), den möglichen weiteren Komponenten der erfindungsgemäßen homogenen Polymerlegierungen, liegen, angegeben als Gewichtsmittel, meist bei 1000 bis 3 Millionen, vorzugsweise bei 20 000 bis 200 000, insbesondere bei 40 000 bis 100 000.

Die erfindungsgemäßen homogen mischbaren Polymerlegierungen können aus einer gemeinsamen Lösung, die mindestens ein sulfoniertes, aromatisches Polyetherketon und gegebenenfalls weitere Polymerbestandteile, wie z.B. Polyvinylpyrrolidon und/oder CoPVPAc oder die mindestens ein sulfoniertes aromatisches Polyetherketon und mindestens ein Polyaramid oder mindestens ein sulfoniertes Polyetherketon, mindestens ein Polyaramid und gegebenenfalls weitere Polymerbestandteile, wie z.B. Polyvinylpyrrolidon und/oder CoPVPAc enthält, in einem aprotischen organischen Lösemittel, z.B. Dimethylformamid, Dimethylsulfoxid, N-Methylpyrrolidon oder N,N-Dimethylacetamid, hergestellt werden. Dazu kann beispielsweise das Polyaramid im entsprechenden Lösemittel polykondensiert, das sulfonierte Polyetherketon und gegebenenfalls weitere Polymerbestandteile (wie z.B. Polyvinylpyrrolidon und/oder CoPVPAc) in geeigneter Konzentration gelöst und anschließend eine Mischung der jeweiligen Polymerlösungen im berechneten Mengenverhältnis hergestellt werden. Gegebenenfalls können diesen Lösungsmitteln in bekannter Weise zur Erhöhung der Löslichkeit bzw. zur Stabilisierung der Polyamidlösungen Halogenidsalze der ersten und zweiten Gruppe des Periodensystem zugegeben werden.

Alternativ dazu kann sulfoniertes Polyetherketon und gegebenenfalls weitere Polymerbestandteile (wie z.B. Polyvinylpyrrolidon und/oder CoPVPAc) in trockener Form direkt in die Polyaramidlösung nach Abschluß der Polykondensation gegeben werden.

Zur Herstellung der ternären Legierung ist die Polykondensation des Polyaramids in Gegenwart von Polyvinylpyrrolidon oder CoPVPAc und anschließender Zugabe von sulfoniertem Polyetherketon in Lösung oder in trockener Form bevorzugt.

Bezüglich der Herstellung der quartären Legierung ist die Polykondensation des Polyaramids in Gegenwart von Polyvinylpyrrolidon und CoPVPAc und anschließender Zugabe von sulfoniertem Polyetherketon in Lösung oder in trockener Form bevorzugt.

Besonders bevorzugt wird ein Verfahren, bei dem die Polykondensation zur Herstellung des Polyaramids in Gegenwart des sulfonierten Polyetherketons und gegebenenfalls in Gegenwart von Polyvinylpyrrolidon und/oder CoPVPAc durchgeführt wird.

Die erfindungsgemäßen Polymerlegierungen können aus den Lösungen durch Entfernen des Lösungsmittels, z. B. durch Verdampfen, isoliert und zu Zwischenprodukten (Granulat oder Pulver) weiterverarbeitet werden, die dann als Rohstoffe für die Herstellung von Formkörpern, Folien, Fasern oder Beschichtungen eingesetzt werden können.

Vorteilhafte Eigenschaften der erfindungsgemäßen homogen mischbaren Polymerlegierungen auf der Basis von sulfonierten Polyetherketonen und vollaromatischen Polyaramiden sind ihre z.B. gegenüber sulfonierten Polyetherketonen verbesserten mechanischen Eigenschaften, besonders vorteilhaft ist die verbesserte Reißdehnung (Tabelle 2). Darüber hinaus kann die Hydrophilie der Legierungen durch Zumischen von Polyvinylpyrrolidon oder CoPVPAc gezielt eingestellt werden (Tabelle 3).

Die Erfindung wird durch die nachfolgenden Beispiele näher erläutert.

### Beispiele

Folgende Polymere wurden synthetisiert:

Polyaramid I (ARA I), mit einer inhärenten Viskosität von 1.0 dl/g, gemessen in NMP bei 25°C, mit wiederkehrenden Einheiten der folgenden Formel:

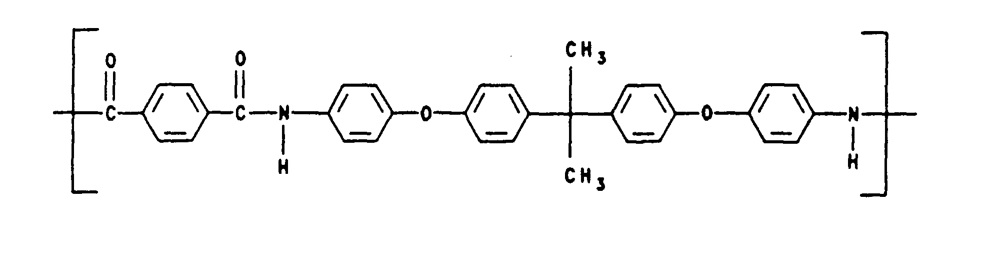

Polyaramid II (ARA II), mit einer inhärenten Viskosität von 0,8 dl/g, gemessen in NMP bei 25°C, mit wiederkehrenden Einheiten der folgenden Formel:

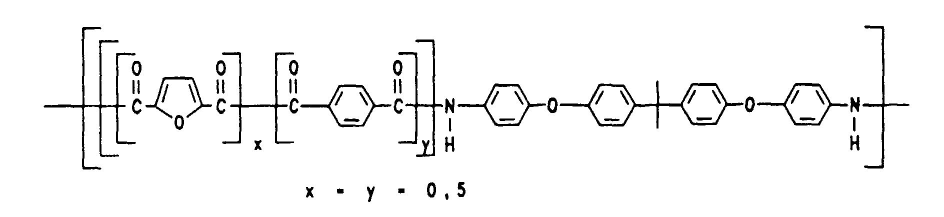

Polyaramid III (ARA III), mit einer inhärenten Viskosität von 1,2 dl/g, gemessen in NMP bei 25°C, mit wiederkehrenden Einheiten der folgenden Formel:

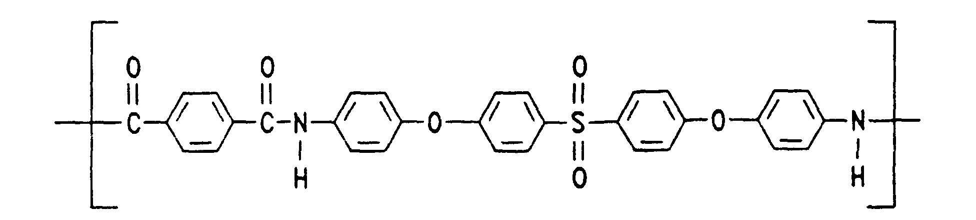

Polyaramid IV (ARA IV), mit einer inhärenten Viskosität von 1,5 dl/g, gemessen in NMP bei 25°C, mit wiederkehrenden Einheiten der folgenden Formel:

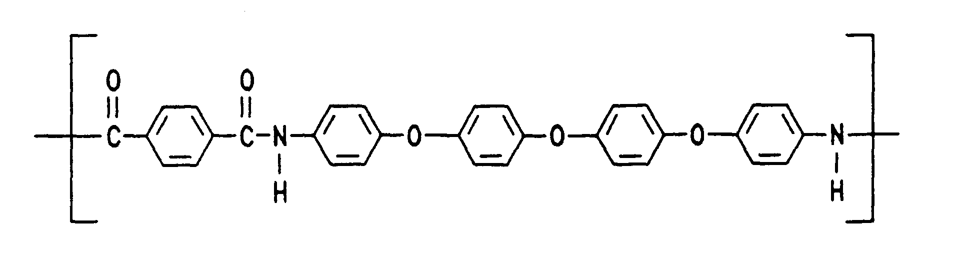

Polyaramid V (ARA V), mit einer inhärenten Viskosität 3,0 dl/g, gemessen in H₂SO₄ bei 25°C, mit wiederkehrenden Einheiten der folgenden Formel:

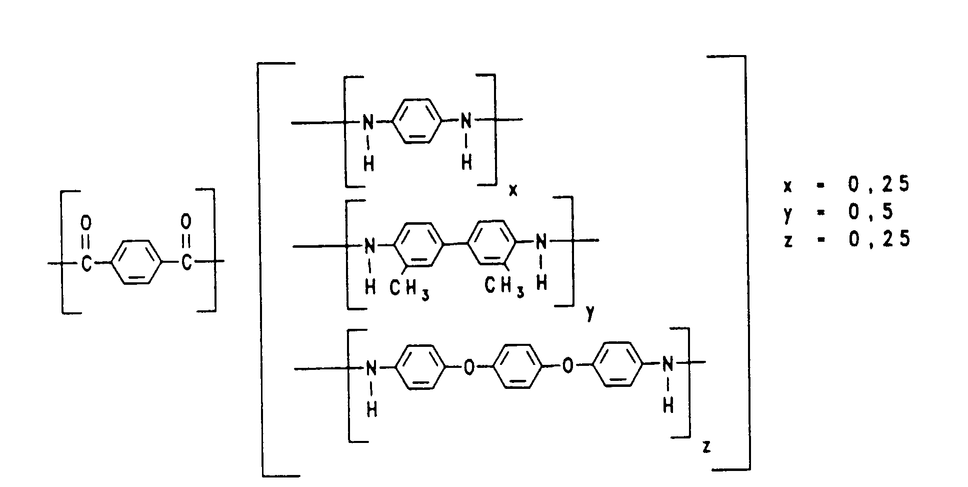

Sulfoniertes Polyetherketon I (PEK-I), mit einer inhärenten Viskosität von 0,7 dl/g, gemessen in Schwefelsäure bei 25°C, mit wiederkehrenden Einheiten der folgenden Formel

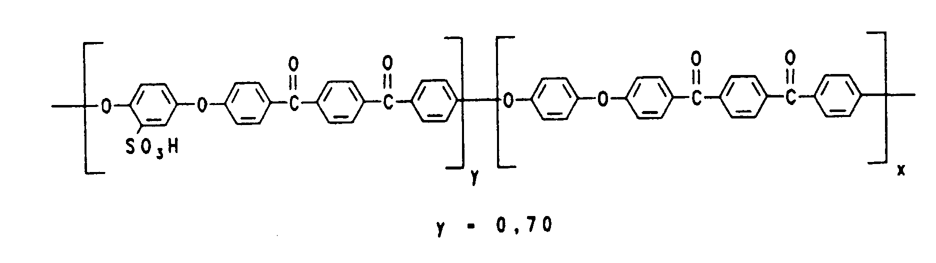

Sulfoniertes Polyetherketon II (PEK-II), mit einer inhärenten Viskosität von 0,65 dl/g, gemessen in Schwefelsäure bei 25°C, mit wiederkehrenden Einheiten der folgenden Formel

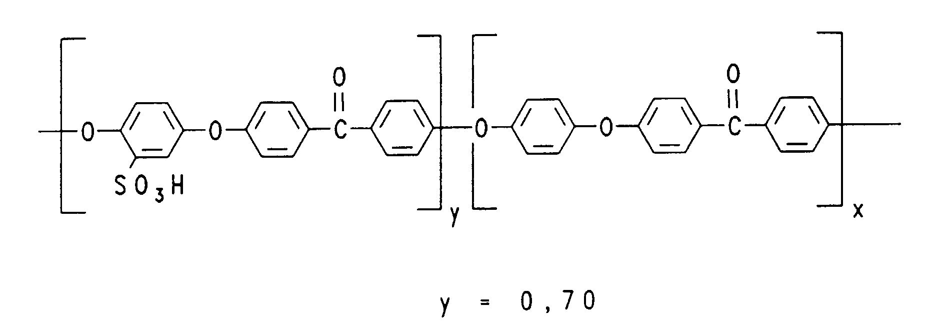

Sulfoniertes Polyetherketon III (PEK-III), mit einer inhärenten Viskosität von 0,65 dl/g gemessen in Schwefelsäure bei 25°C, bestehend aus wiederkehrenden Einheiten der folgenden Formel 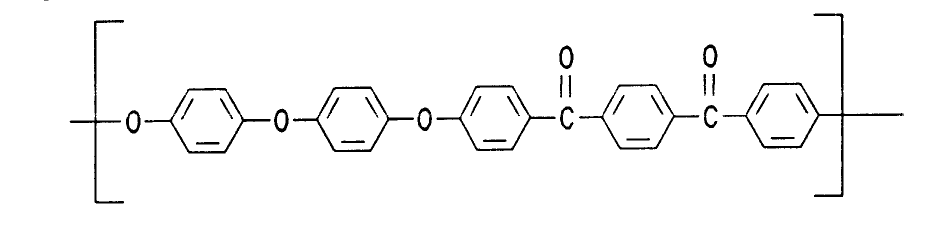 in der 1,38 O-Phenylen-O-Einheiten pro wiederkehrender Einheit eine SO₃H-Gruppe tragen.

Poly-N-vinylpyrolidon (PVP, ®Luviskol K30, BASF) und das Polymerisat aus N-Vinyl-2-Pyrollidon und Vinylacatat (CoPVPAc, ®Kollidon VA 64, BASF) wurden eingesetzt mit Molekulargewichten von 40 000, angegeben als Massenmittel.

### Beispiel 1 und 2: Vergleichsbeispiele

### Beispiele 3 bis 13: Herstellung der Legierungen

Die Zusammensetzungen der einzelnen Legierungen sind in Tabelle 1 zusammengestellt.

Die sulfonierten Polyetherketone, die aromatischen Polyamide und Polyvinylpyrrolidone wurden in unterschiedlichen Gewichtsverhältnissen (vgl. Tabelle in N-Methylpyrolidon gelöst (10 %ige (g/g) Lösungen). Diese Lösungen wurden auf Glasplatten aufgerakelt. Anschließend wurde das Lösungsmittel entfernt (verminderter Druck bei 80°C für 24 Stunden). Die erhaltenen Folien wurden nach dem Trocknen mehrfach gewässert und erneut getrocknet (verminderter Druck bei 80°C für 24 Stunden). Sämtliche Folien waren transparent und duktil, d.h., sie konnten, ohne zu brechen, aufeinander gefaltet werden. Tabelle 2 zeigt, daß die Reißspannung der sulfonierten Polyetherketone durch Legieren mit aromatischen Polyamiden verbessert werden kann. Die Hydrophilie (Wasseraufnahme) der Legierungen kann durch Zumischen von Polyvinylpyrolidon gezielt eingestellt werden (vgl. Tabelle 3).

### Beispiel 14: Vergleichsbeispiel

### Beispiele 15 bis 18:

### Legierungen für die Faserherstellung

Zur Herstellung der Legierungen wurden 0,4 mol der Diaminkomponenten (25 mol% Paraphenylendiamin, 50 mol% 3,3'-Dimethyl-4,4'-diaminobiphenyl und 25 mol% 1,4-Bis(4-aminophenoxy)-benzol) und 1 - 50 Gew.-% (bezogen auf das Polymer = ges. 134,4 g Aramid) des sulfonierten Polyetherketones PEK in 2100 ml NMP gelöst. Zu dieser Lösung wurden bei 70°C Terephthalsäuredichlorid zugegeben und die Polykondensation gestartet. Nach der Zugabe von CaO (103 % (g/g)) wird die Lösung filtriert und schließlich auf einer Spinnanlage versponnen. Die textilen Daten dieser Fasern sind in Tabelle 4 zusammengefaßt:

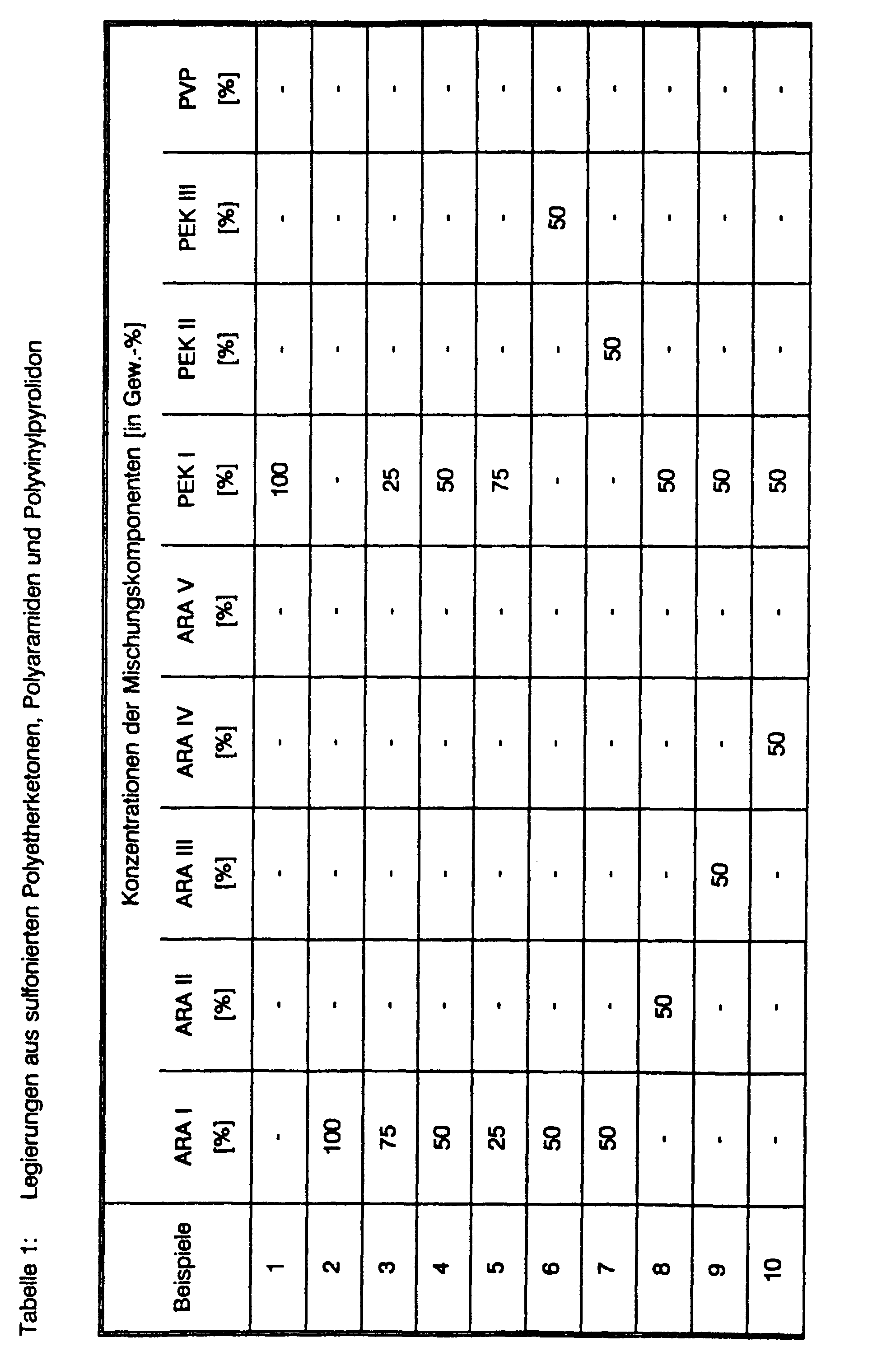

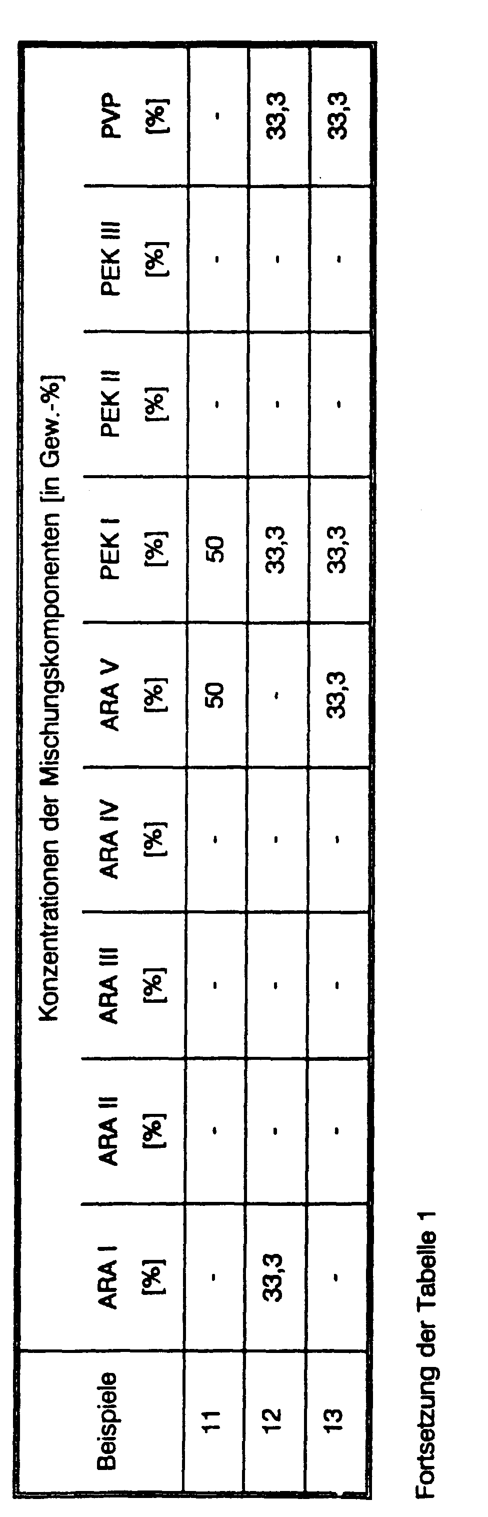

**Tabelle 2:**

| Mechanische Daten der Folien aus den Polymerlegierungen gemäß den Beispielen 1 bis 10 | | | |
|---|---|---|---|
| Beispiel | E-Modul [GPa] | Reißdehnung [MPa] | Reißspannung [MPa] |
| 1 | 3,8 | 24 | 17 |
| 2 | 3,5 | 100 | 52 |
| 3 | 2,8 | 39 | 50 |
| 4 | 2,8 | 20 | 50 |
| 5 | 3,2 | 37 | 39 |
| 6 | 3,1 | 38 | 45 |
| 7 | 3,2 | 31 | 67 |
| 8 | 3,6 | 20 | 55 |
| 9 | 3,4 | 14 | 60 |
| 10 | 2,9 | 57 | 49 |

- Prüfgerät:: ®Instron 4302 (Fa. Instron, Offenbach, Deutschland)
- Probenkörper:: Folie gegossen aus Lösungsblends
- Probengeometrie:: Länge: 50 mm
Breite: 10 mm
Dicke: 0,25 mm
- Prüfvorschrft:: 1 kN Meßdose
- Einspannlänge:: 35 mm

Messung des E-Moduls mit dynamischem Wegaufnehmer
- Meßlänge:: 10 mm
- Meßgeschwindigkeit:: 1 mm/min bis 0,35 mm Dehnung
Messung über Traversenweg
- Meßlänge:: 35 mm
- Meßgeschwindigkeit:: 1 mm/min bis 0,35 mm,
dann Umstellung auf 50 mm/min bis Bruch

**Tabelle 3:**

| Wasseraufnahmetests nach ASTM D 4019-81 | | | | | |
|---|---|---|---|---|---|
| | ¹Wassergehalt Gew.-% | | | | |
| Beispiel | min. | max | ²MW | Anzahl der Messungen | Standardabweichung |
| 1 | 11,5 | 12,1 | 11,8 | 4 | ±0,25 |
| 2 | 2,46 | 2,85 | 2,63 | 4 | ±0,19 |
| 3 | 4,52 | 4,90 | 4,72 | 4 | ±0,16 |
| 4 | 6,07 | 6,52 | 6,29 | 5 | ±0,19 |
| 5 | 9,23 | 9,65 | 9,42 | 4 | ±0,20 |
| 12 | 6,61 | 7,10 | 6,88 | 4 | ±0,25 |
| 12 | 12,1 | 12,1 | 12,1 | 2 | ±0,00 |
| 13 | 12,1 | 12,9 | 12,4 | 3 | ±0,40 |

| | | | | | |
|---|---|---|---|---|---|
| ¹ Bezogen auf das Trockengewicht | | | | | |
| ²MW = Mittelwert | | | | | |

Zur Bestimmung der Wasseraufnahmefähigkeit der hergestellten Materialien nach ASTM D 4019-81 wurden die Proben bei 23°C bei einer relativen Luftfeuchtigkeit von 85% mindestens 210 Tage lang gelagert. Die Mengen an Wasser (Wassergehalt Gew-%), die bei einer erhöhten Temperatur gemäß der angegebenen Norm von den Proben abgegeben werden, wurden anschließend coulombmetrisch bestimmt.

**Tabelle 4:**

| Textile Daten der Fasern gemäß den Beispielen 14 bis 18 | | | | | |
|---|---|---|---|---|---|
| Beispiel | PEK I [%] | Verstreckung 1: | Festigkeit [cn/tex] | Dehnung [%] | Modul [N/tex] |
| 14 | - | 9,67 | 167 | 3,1 | 56 |
| 15 | 1 | 11,46 | 136 | 2,7 | 54 |
| 16 | 5 | 8,64 | 125 | 2,7 | 49 |
| 17 | 10 | 8,64 | 122 | 2,8 | 50 |
| 18 | 20 | 7,82 | 94 | 2,4 | 44 |

Die in Tabelle 4 angegebenen Daten wurden in Anlehnung an DIN 53834 aufgenommen. Abweichungen: Verformungsgeschwindigkeit 10% / Minute; Messung des Moduls als Sekantenmodul bei 0,3 bis 0,5 % Dehnung.

## Patentansprüche

1. Homogene Polymerlegierung, enthaltend als Hauptbestandteile sulfonierte, aromatische Polyetherketone und mindestens ein Polyamid, dadurch gekennzeichnet, daß das Polyamid ein vollaromatisches Polyamid ist.

2. Polymerlegierung gemäß Anspruch 1, dadurch gekennzeichnet, daß sie aus einem sulfonierten, aromatischen Polyetherketon und einem vollaromatischen Polyamid besteht

3. Polymerlegierung gemäß Anspruch 1, dadurch gekennzeichnet, daß sie noch Poly-N-vinyl-2-pyrrolidon enthält.

4. Polymerlegierung gemäß Anspruch 3, dadurch gekennzeichnet, daß sie neben Poly-N-vinyl-2-pyrrolidon noch ein Copolymerisat aus N-Vinyl-2-pyrrolidon und Vinylacetat enthält.

5. Polymerlegierung gemäß Anspruch 1, dadurch gekennzeichnet, daß sie noch ein Copolymerisat aus N-Vinyl-2-pyrrolidon und Vinylacetat enthält.

6. Polymerlegierung nach Anspruch 2, dadurch gekennzeichnet, daß sie 1 bis 99 Gew.-% mindestens eines sulfonierten, aromatischen Polyetherketons und 1 bis 99 Gew.-% eines vollaromatischen Polyamids enthält, wobei sich die Prozentangaben auf die Summe der Bestandteile (sulfoniertes, aromatisches Polyetherketon + aromatisches Polyamid) beziehen.

7. Polymerlegierung gemäß Anspruch 3, 4 oder 5 dadurch gekennzeichnet, daß sie 5 bis 60 Gew.-% mindestens eines sulfonierten, aromatischen Polyetherketons und 20 bis 90 Gew.-% mindestens eines vollaromatischen Polyamids enthält.

8. Polymerlegierung gemäß Anspruch 7, dadurch gekennzeichnet, daß sie 0,1 bis 30 Gew.-% Polyvinylpyrrolidon und/oder mindestens eines Copolymerisates aus N-Vinyl-2-pyrrolidon und Vinylacetat enthält.

9. Homogene Polymerlegierung nach Anspruch 1 oder 2, dadurch gekennzeichnet, daß sie mindestens ein sulfoniertes, aromatisches Polyetherketon mit der allgemeinen Formel I, 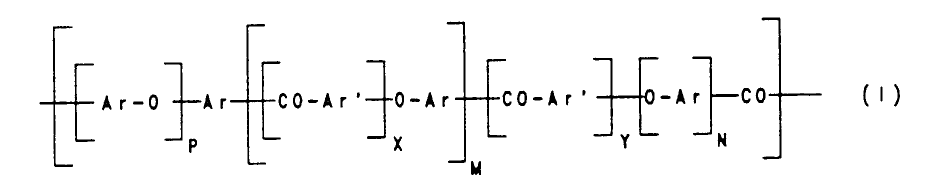 enthält, wobei
-Ar- einen Phenylenring mit para- und/oder meta-Bindungen,
-Ar'- einen Phenylen-, Naphthylen-, Biphenylen-, Anthrylen- oder eine andere zweiwertige aromatische Einheit,
X, M und N unabhängig voneinander Null oder 1,
Y Null, 1, 2 oder 3,
p 1, 2, 3 oder 4,
bedeuten und wobei in der allgemeinen Formel I mindestens 20 % und maximal 100% der O-Phenylen-O-Einheiten mit einer SO₃H-Gruppe substituiert sind.

10. Polymerlegierung nach Anspruch 1 oder 2, dadurch gekennzeichnet, daß sie mindestens ein sulfoniertes, aromatisches Polyetherketon der allgemeinen Formeln II, 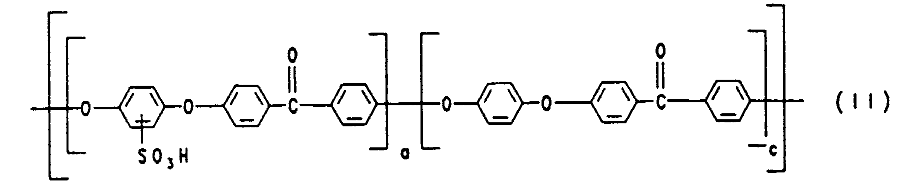 wobei a eine von 0,2 bis 1, c eine Zahl von 0 bis 0,8 bedeutet und die Summe a + c = 1 beträgt, der allgemeinen Formel III 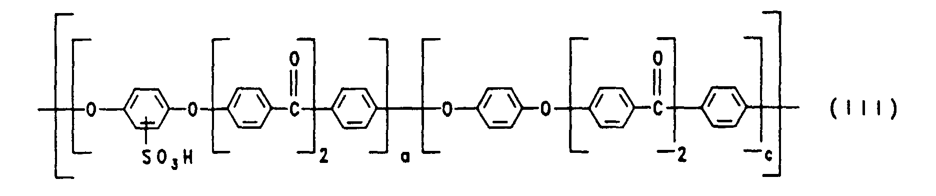 wobei a eine Zahl von 0,2 bis 1, c eine Zahl von 0 bis 0,8 bedeutet und die Summe a + c = 1 beträgt, oder der allgemeinen Formel IV enthält 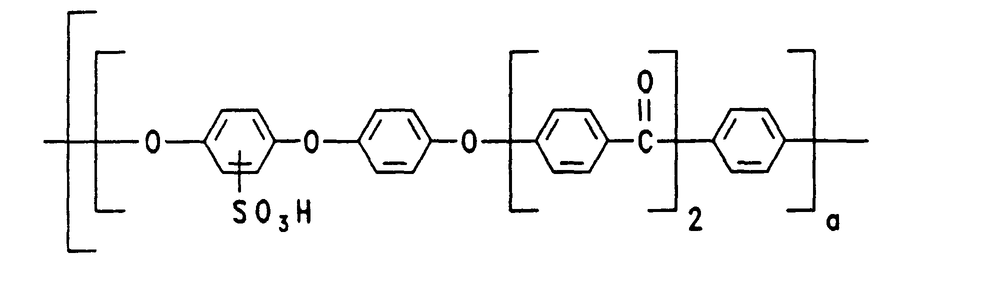 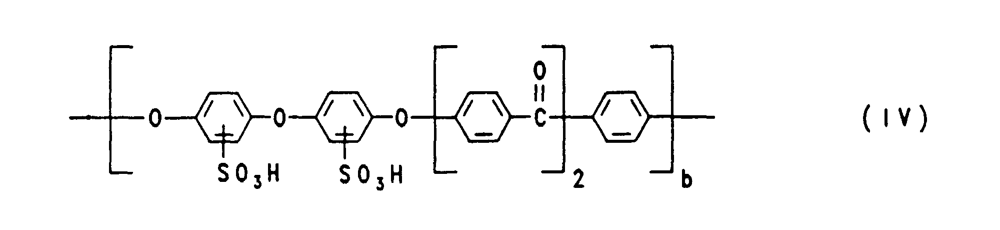 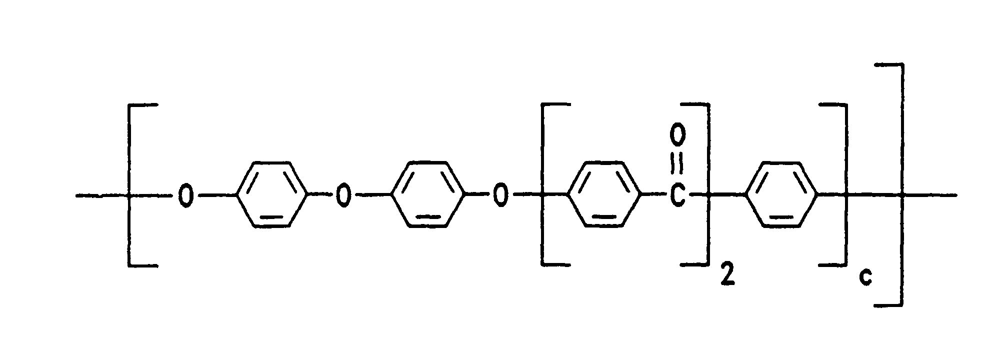 wobei a eine Zahl von 0 bis 1, b eine Zahl von 0 bis 1, c eine Zahl von 0 bis 0,5 bedeutet, und die Summe a + b + c = 1 beträgt.

11. Polymerlegierung nach Anspruch 1 oder 2, dadurch gekennzeichnet, daß für die sulfonierten, aromatischen Polyetherketone sulfonierte Copolymere, die aus mindestens zwei unterschiedlichen Wiederholeinheiten der allgemeinen Formeln II, III und IV aufgebaut sind, eingesetzt werden.

12. Polymerlegierung nach Anspruch 1 oder 2, dadurch gekennzeichnet, daß die sulfonierten, aromatischen Polyetherketone Molmassen besitzen, die, angegeben als Gewichtsmittel, im Bereich von 10 000 bis 60 000 g/mol, liegen

13. Polymerlegierung nach den Ansprüchen 1 oder 2, dadurch gekennzeichnet, daß sie mindestens ein vollaromatisches Copolyamid enthält, das Struktureinheiten der allgemeinen Formel V
-HN-Ar²-Z¹-Ar³-(-Z²-Ar³-Z³-Ar²-)ₙ-NH-OC-Ar¹-CO- (V)
aufweist, wobei
-Ar¹- einen 1,4-Phenylen- oder einen anderen zweiwertigen (C₆-C₁₂)-aromatischen oder heteroaromatischen, gegebenenfalls Sulfonsäuregruppen oder Etherbrücken enthaltenden Rest, der gegebenenfalls mit einem oder zwei verzweigten oder unverzweigten C₁-C₄-Alkyl- oder Alkoxyresten oder mit einem oder mehreren Halogenatomen substituiert ist, bedeutet,
-Ar²- und -Ar³- für gleiche oder verschiedene 1,2-Phenylen, 1,3-Phenylen- oder 1,4-Phenylenreste, die gegebenenfalls mit einem oder zwei verzweigten oder unverzweigten C₁-C₄-Alkyl- oder Alkoxyresten oder mit einem oder mehreren Halogenatomen substituiert sind, stehen,
-Z¹-, -Z²- und -Z³- unabhängig voneinander eine direkte Bindung oder einen der folgenden zweiwertigen Reste -O-, -C(CH₃)₂-, -C(CF₃)₂-, -SO₂- oder -O-Ar²-O-bedeuten, und -Ar²- die vorstehend genannte Bedeutung hat,
n ein ganze Zahl, insbesondere ist n = 0, 1 oder 2, ist.

14. Polymerlegierung nach Anspruch 13, dadurch gekennzeichnet, daß sie mindestens ein vollaromatisches Copolyamid mit der Struktureinheit
(A) -OC-Ar¹-CO-
sowie drei verschiedenen Struktureinheiten der Formeln
(B) -NH-Ar²-NH-
und
(D) -HN-Ar²-Z¹-Ar³-(-Z²-Ar³-Z³-Ar²-)ₙ NH-
aufweist, wobei jeweils mindestens eine Struktureinheit B und D vorhanden ist und Ar² in B und D eine unterschiedliche Bedeutung haben kann,
und Ar¹, Ar², Ar³ und Z¹, Z², Z³ sowie n die in Anspruch 13 aufgeführten Bedeutungen haben.

15. Polymerlegierung nach Anspruch 14, dadurch gekennzeichnet, daß -Ar¹- in den Struktureinheiten A für 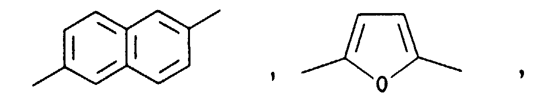 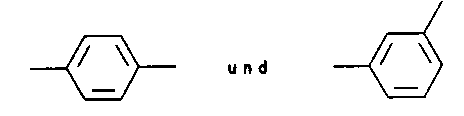 steht.

16. Polymerlegierung nach Anspruch 14, dadurch gekennzeichnet, daß in den Struktureinheiten D der vollaromatischen Copolyamiden der Rest -Ar²-Z¹-Ar³- ausgewählt wird aus

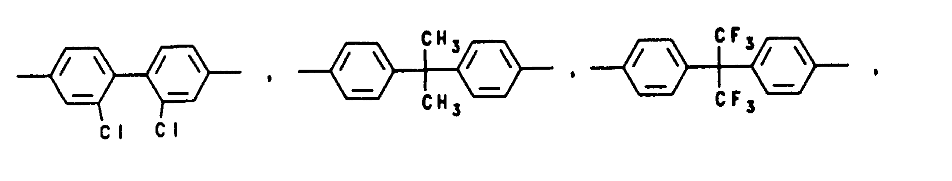

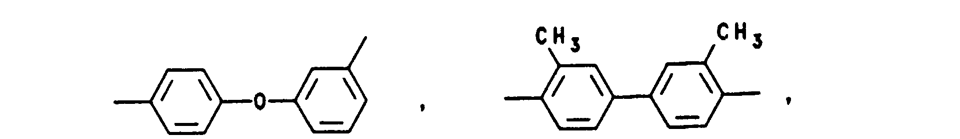

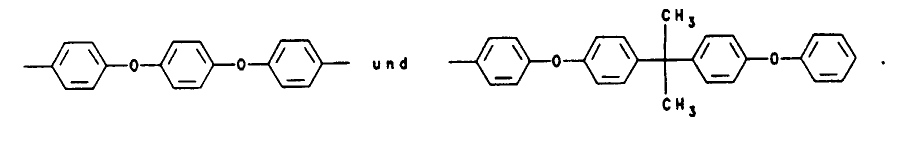

17. Polymerlegierung nach Anspruch 14, dadurch gekennzeichnet, daß in dem vollaromatischen Copolyamid die Struktureinheiten A, B und D in den Molverhältnissen B/A = 0,3 - 0,9 und D/A = 0,1 - 0,7 und (B+D)/A = 0,9 bis 1,1 vorliegen.

18. Polymerlegierung nach Anspruch 13, dadurch gekennzeichnet, daß die inhärente Viskosität bei den als Legierungskomponenten verwendeten Copolyamiden zwischen 50 und 1000 cm³/g, bestimmt in 96 %iger Schwefelsäure bei 25°C, beträgt.

19. Polymerlegierung nach Anspruch 3, dadurch gekennzeichnet, daß das Molekulargewicht des Polyvinylpyrrolidons, angegeben als Gewichtsmittel, im Bereich von 1000 bis 3 Millionen, vorzugsweise im Bereich von 20 000 bis 200 000, insbesondere im Bereich von 40 000 bis 100 000, liegt.

20. Verfahren zur Herstellung einer homogenen Polymerlegierung nach mindestens einem der Ansprüche 1 bis 13, dadurch gekennzeichnet, daß man eine Lösung bereitet, die das sulfonierte aromatische Polyetherketon, das vollaromatische Polyamid und die etwaigen restlichen Polymerbestandteile in einem aprotischen organischen Lösemittel enthält und dann das Lösemittel entfernt.

21. Verfahren nach Anspruch 20, dadurch gekennzeichnet, daß man das aromatische Polyamid in einem aprotischen, organischen Lösemittel durch Polykondensation herstellt und die Lösung des Polyamids mit einer Lösung vereinigt, die das sulfonierte, aromatische Polyetherketon sowie gegebenenfalls weitere Polymerbestandteile im gleichen Lösemittel enthält, und dann das Lösemittel entfernt.

22. Verfahren nach Anspruch 20, dadurch gekennzeichnet, daß man das vollaromatische Polyamid in einem aprotischen, organischen Lösemittel durch Polykondensation herstellt und man das sulfonierte, aromatische Polyetherketon und gegebenenfalls weitere Polymerbestandteile in der Lösung des vollaromatischen Polyamids auflöst.

23. Verwendung der Polymerlegierung gemäß Anspruch 1 oder 2, für die Herstellung von Formkörpern, Folien oder Fasern.

## Claims

1. A homogeneous polymer alloy comprising a sulfonated, aromatic polyether ketone and at least one polyamide as the main constituents, wherein the polyamide is a completely aromatic polyamide.

2. A polymer alloy as claimed in claim 1, which comprises a sulfonated, aromatic polyether ketone and a completely aromatic polyamide.

3. A polymer alloy as claimed in claim 1, which also comprises poly-N-vinyl-2-pyrrolidone.

4. A polymer alloy as claimed in claim 3, which also comprises a copolymer of N-vinyl-2-pyrrolidone and vinyl acetate, in addition to poly-N-vinyl-2-pyrrolidone.

5. A polymer alloy as claimed in claim 1, which also comprises a copolymer of N-vinyl-2-pyrrolidone and vinyl acetate.

6. A polymer alloy as claimed in claim 2, which comprises 1 to 99% by weight of at least one sulfonated, aromatic polyether ketone and 1 to 99% by weight of a completely aromatic polyamide, the percentage data relating to the sum of the constituents (sulfonated, aromatic polyether ketone + aromatic polyamide).

7. A polymer alloy as claimed in claim 3, 4 or 5, which comprises 5 to 60% by weight of at least one sulfonated, aromatic polyether ketone and 20 to 90% by weight of at least one completely aromatic polyamide.

8. A polymer alloy as claimed in claim 7, which comprises 0.1 to 30% by weight of polyvinylpyrrolidone and/or at least one copolymer of N-vinyl-2-pyrrolidone and vinyl acetate.

9. A homogeneous polymer alloy as claimed in claim 1 or 2, which comprises at least one sulfonated, aromatic polyether ketone of the formula I 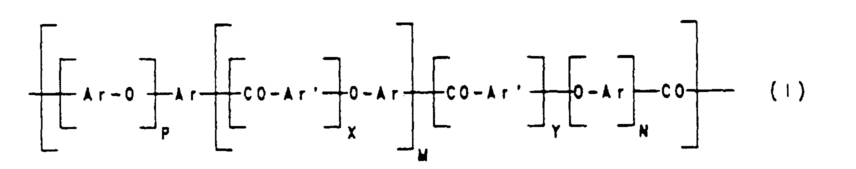 in which
-Ar- is a phenylene ring with para and/or meta bonds,
-Ar'- is a phenylene, naphthylene, biphenylene or anthrylene unit or another divalent aromatic unit,
X, M and N independently of one another are zero or 1,
Y is zero, 1, 2 or 3 and
p is 1, 2, 3 or 4,
and in which, in the formula I, at least 20% and not more than 100% of the O-phenylene-O units are substituted by an SO₃H group.

10. A polymer alloy as claimed in claim 1 or 2, which comprises at least one sulfonated, aromatic polyether ketone of the formula II 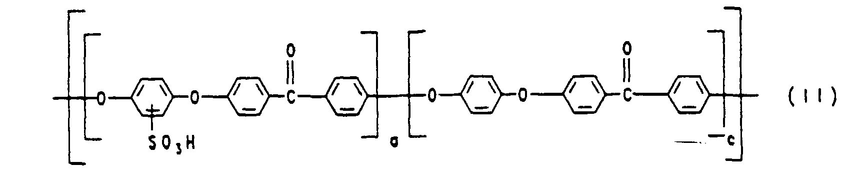 in which a is a number from 0.2 to 1, c is a number from 0 to 0.8 and the sum of a + c = 1, of the formula III 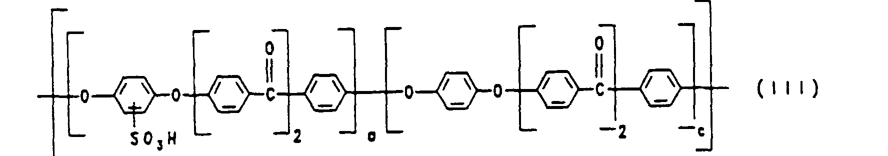 in which a is a number from 0.2 to 1, c is a number from 0 to 0.8 and the sum of a + c = 1, or of the formula IV 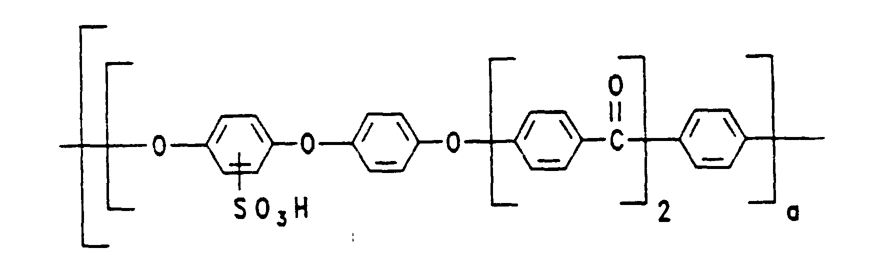 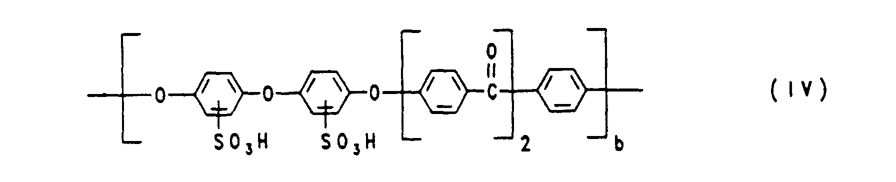 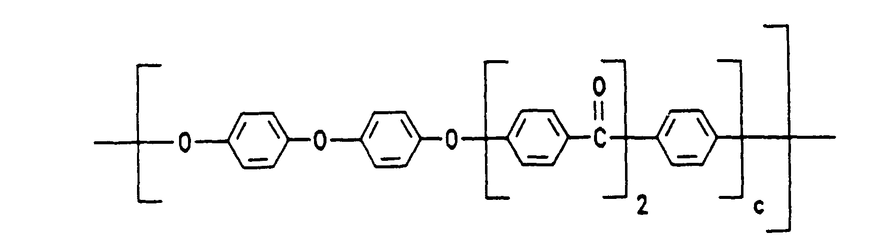 in which a is a number from 0 to 1, b is a number from 0 to 1, c is a number from 0 to 0.5 and the sum of a + b + c = 1.

11. A polymer alloy as claimed in claim 1 or 2, wherein a sulfonated copolymer which is built up from at least two different recurring units of the formulae II, III and IV is employed for the sulfonated, aromatic polyether ketone.

12. A polymer alloy as claimed in claim 1 or 2, wherein the sulfonated, aromatic polyether ketone has a molecular weight which, stated as the weight-average, is in the range from 10,000 to 60,000 g/mol.

13. A polymer alloy as claimed in claims 1 or 2, which comprises at least one completely aromatic copolyamide which contains structural units of the formula V
-HN-Ar²-Z¹-Ar³- (-Z²-Ar³-Z³-Ar²-)ₙ-NH-OC-Ar¹-CO- (V)
in which
-Ar¹- is a 1,4-phenylene radical or another divalent (C₆-C₁₂) -aromatic or heteroaromatic radical optionally containing sulfonic acid groups or ether bridges, which is optionally substituted by one or two branched or unbranched C₁-C₄-alkyl or alkoxy radicals or by one or more halogen atoms,
-Ar²- and -Ar³- are identical or different 1,2-phenylene, 1,3-phenylene or 1,4-phenylene radicals, which are optionally substituted by one or two branched or unbranched C₁-C₄-alkyl or alkoxy radicals or by one or more halogen atoms,
-Z¹-, -Z²- and -Z³- independently of one another are a direct bond or one of the following divalent radicals: -O-, -C(CH₃)₂-, -C(CF₃)₂-, -SO₂- or -O-Ar²-O-, and -Ar²- has the abovementioned meaning, and
n is an integer, in particular n = 0, 1 or 2.

14. A polymer alloy as claimed in claim 13, which comprises at least one completely aromatic copolyamide with the structural unit
(A) -OC-Ar¹-CO-,
and three different structural units of the formulae
(B) -NH-Ar²-NH-
and
(D) -HN-Ar²-Z¹-Ar³-(-Z²-Ar³-Z³-Ar²-)ₙ-NH-
in which in each case at least one structural unit B and D is present and Ar² can have different meanings in B and D,
and Ar¹, Ar², Ar³ and Z¹, Z², Z³ and n have the meanings given in claim 13.

15. A polymer alloy as claimed in claim 14, wherein -Ar¹- in the structural units A is

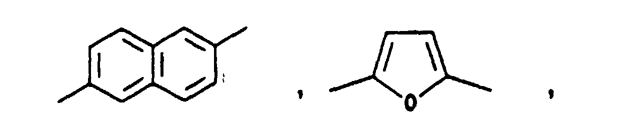

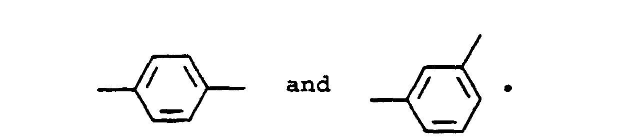

16. A polymer alloy as claimed in claim 14, wherein, in the structural units D of the completely aromatic copolyamide, the radical -Ar²-Z¹-Ar³- is chosen from

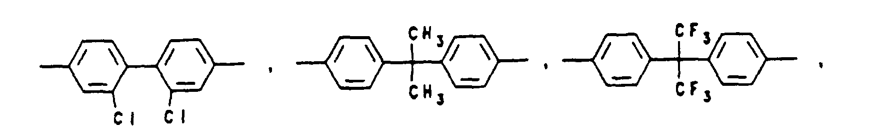

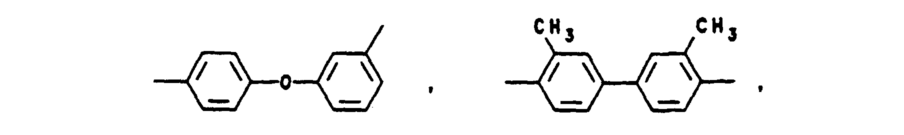

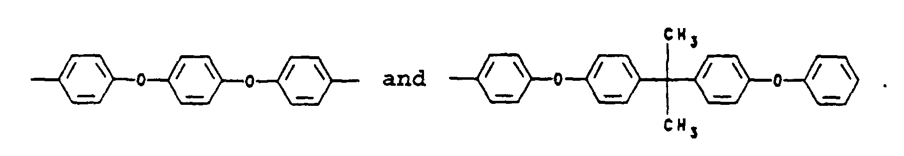

17. A polymer alloy as claimed in claim 14, wherein, in the completely aromatic copolyamide, the structural units A, B and D are present in the molar ratios of B/A = 0.3 - 0.9 and D/A = 0.1 - 0.7 and (B + D)/A = 0.9 to 1.1.

18. A polymer alloy as claimed in claim 13, wherein the intrinsic viscosity of the copolyamide used as an alloy component is between 50 and 1000 cm³/g, determined in 96% strength sulfuric acid at 25°C.

19. A polymer alloy as claimed in claim 3, wherein the molecular weight of the polyvinylpyrrolidone, stated as the weight average, is in the range from 1000 to 3 million, preferably in the range from 20,000 to 200,000, in particular in the range from 40,000 to 100,000.

20. A process for the preparation of a homogeneous polymer alloy as claimed in at least one of claims 1 to 13, which comprises preparing a solution which comprises the sulfonated aromatic polyether ketone, the completely aromatic polyamide and any remaining polymer constituents in an aprotic organic solvent, and then removing the solvent.

21. The process as claimed in claim 20, wherein the aromatic polyamide is prepared by polycondensation in an aprotic, organic solvent and the solution of the polyamide is combined with a solution which comprises the sulfonated, aromatic polyether ketone and any other polymer constituents in the same solvent, and the solvent is then removed.

22. The process as claimed in claim 20, wherein the completely aromatic polyamide is prepared by polycondensation in an aprotic, organic solvent and the sulfonated, aromatic polyether ketone and any other polymer constituents are dissolved in the solution of the completely aromatic polyamide.

23. The use of a polymer alloy as claimed in claim 1 or 2, for the production of shaped articles, films or fibers.

## Revendications

1. Alliage de polymères homogène, contenant comme constituants principaux des polyéthercétones aromatiques sulfonées et au moins un polyamide, caractérisé en ce que le polyamide est un polyamide entièrement aromatique.

2. Alliage de polymères selon la revendication 1, caractérisé en ce qu'il est constitué d'une polyéthercétone aromatique sulfonée et d'un polyamide entièrement aromatique.

3. Alliage de polymères selon la revendication 1, caractérisé en ce qu'il contient en outre une poly(N-vinyl-2-pyrrolidone).

4. Alliage de polymères selon la revendication 3, caractérisé en ce qu'il contient, en plus de la poly(N-vinyl-2-pyrrolidone), un copolymère de N-vinyl-2-pyrrolidone et d'acétate de vinyle.

5. Alliage de polymères selon la revendication 1, caractérisé en ce qu'il contient en outre un copolymère de N-vinyl-2-pyrrolidone et d'acétate de vinyle.

6. Alliage de polymères selon la revendication 2, caractérisé en ce qu'il contient 1 à 99 % en masse d'au moins une polyéthercétone aromatique sulfonée et 1 à 99 % en masse d'un polyamide entièrement aromatique, les données en pourcentage se rapportant à la somme des constituants (polyéthercétone aromatique sulfonée + polyamide entièrement aromatique).

7. Alliage de polymères selon la revendication 3, 4 ou 5, caractérisé en ce qu'il contient 5 à 60 % en masse d'au moins une polyéthercétone aromatique sulfonée et 20 à 90 % en masse d'au moins un polyamide entièrement aromatique.

8. Alliage de polymères selon la revendication 7, caractérisé en ce qu'il contient 0,1 à 30 % en masse d'une polyvinylpyrrolidone et/ou d'au moins un copolymère de N-vinyl-2-pyrrolidone et d'acétate de vinyle.

9. Alliage de polymères homogène selon la revendication 1 ou 2, caractérisé en ce qu'il contient au moins une polyéthercétone aromatique sulfonée de formule générale I 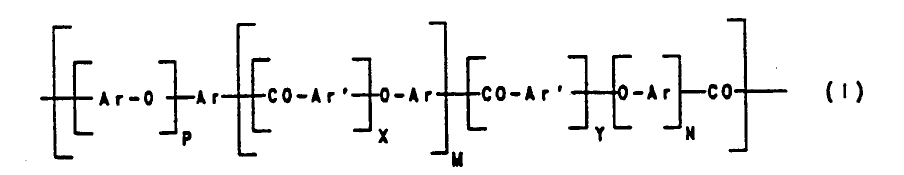 dans laquelle
-Ar- représente un noyau phénylène à liaisons para et/ou méta,
-Ar'- représente une unité phénylène, naphtylène, biphénylène ou anthrylène ou une autre unité aromatique divalente,
X, M et N sont, indépendamment les uns des autres, égaux à 0 ou 1,
Y est égal à 0, 1, 2 ou 3,
p est égal à 1, 2, 3 ou 4,
au moins 20 et au plus 100 % des unités O-phénylène-O de la formule générale I étant substituées par un groupe SO₃H.

10. Alliage de polymères selon la revendication 1 ou 2, caractérisé en ce qu'il contient au moins une polyéthercétone aromatique sulfonée de formule générale II 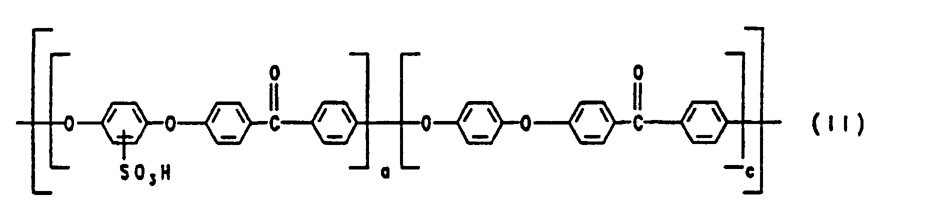 dans laquelle a est un nombre compris entre 0,2 et 1, c est un nombre compris entre 0 et 0,8 et la somme de a + c est égale à 1,
de formule générale III 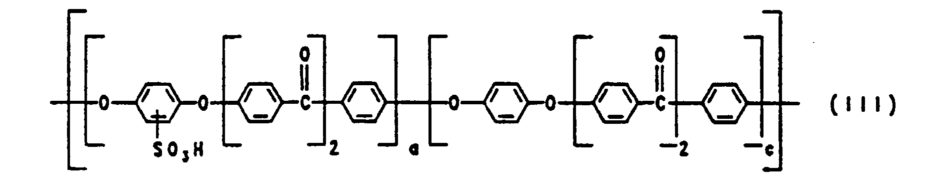 dans laquelle a est un nombre compris entre 0,2 et 1, c est un nombre compris entre 0 et 0,8 et la somme de a + c est égale à 1,
ou de formule générale IV 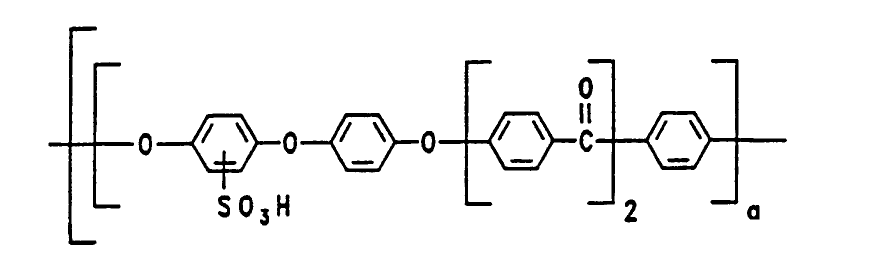 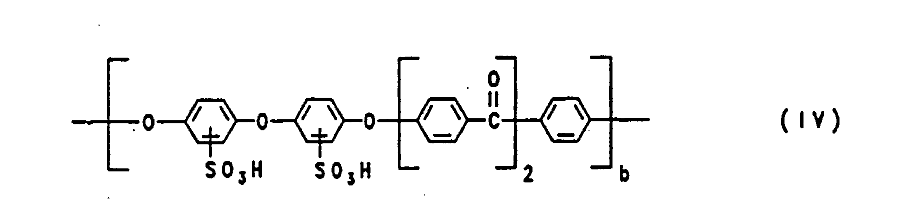 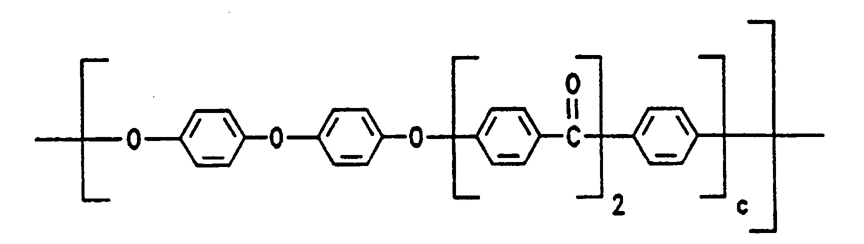 dans laquelle a est un nombre compris entre 0 et 1, b un nombre compris entre 0 et 1, c un nombre compris entre 0 et 0,5, et la somme a + b + c est égale à 1.

11. Alliage de polymères selon la revendication 1 ou 2, caractérisé en ce que l'on utilise comme polyéthercétones aromatiques sulfonées des copolymères constitués d'au moins deux unités constitutives différentes de formule générale II, III et IV.

12. Alliage de polymères selon la revendication 1 ou 2, caractérisé en ce que les polyéthercétones ont des masses molaires, indiquées comme moyennes en poids, comprises entre 10 000 et 60 000 g/mol.

13. Alliage de polymères selon la revendication 1 ou 2, caractérisé en ce qu'il contient au moins un copolyamide entièrement aromatique contenant des unités constitutives de formule générale V
-HN-Ar²-Z¹-Ar³-(-Z²-Ar³-Z³-Ar²-)ₙ-NH-OC-Ar¹-CO- (V)
dans laquelle
-Ar¹- représente un reste 1,4-phénylène ou un autre reste aromatique en C₆-C₁₂ ou hétéroaromatique divalent contenant éventuellement des groupes acide sulfonique ou des ponts éther, et qui est éventuellement substitué par 1 ou 2 restes alkyle ou alcoxy en C₁-C₄ linéaires ou ramifiés ou par un ou plusieurs atomes d'halogène,
-Ar²- et-Ar³- représentent des restes 1,2-phénylène, 1,3-phénylène ou 1,4-phénylène, identiques ou différents, éventuellement substitués par 1 ou 2 restes alkyle ou alcoxy en C₁-C₄ linéaires ou ramifiés ou par un ou plusieurs atomes d'halogène,
-Z¹-, -Z²- et -Z³- représentent, indépendamment les uns des autres, une liaison directe ou l'un des restes divalents -O-, -C(CH₃)₂-, -C(CF₃)₂-, -SO₂- ou -O-Ar²-O-, et -Ar²- a la signification donnée précédemment, et
n est un nombre entier, en particulier égal à 0, 1 ou 2.

14. Alliage de polymères selon la revendication 13, caractérisé en ce qu'il contient au moins un copolyamide entièrement aromatique ayant l'unité constitutive
(A) -OC-Ar¹-CO-,
et trois unités constitutives différentes de formule
(B) -NH-Ar²-NH-
et
(D) -HN-Ar²-Z¹-Ar³-(-Z²-Ar³-Z³-Ar²-)ₙ-NH-
au moins une unité constitutive B et une unité constitutive D étant présentes et Ar² pouvant avoir une signification différente dans B et D,
et où Ar¹, Ar², Ar³ et Z¹, Z² et Z³ et n ont la signification indiquée dans la revendication 13.

15. Alliage de polymères selon la revendication 14, caractérisé en ce que -Ar¹-, dans les unités constitutives A, est

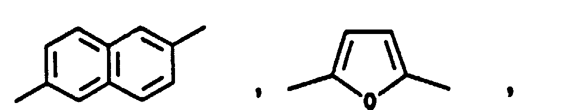

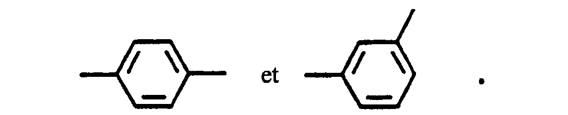

16. Alliage de polymères selon la revendication 14, caractérisé en ce que, dans les unités constitutives D des copolyamides entièrement aromatiques, le reste -Ar²-Z¹-Ar³- est choisi parmi

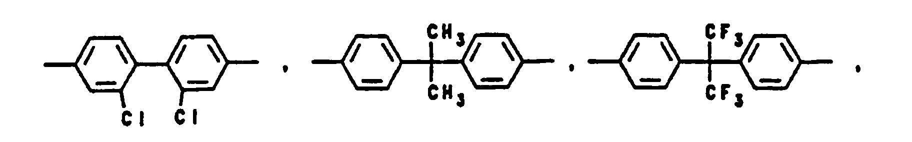

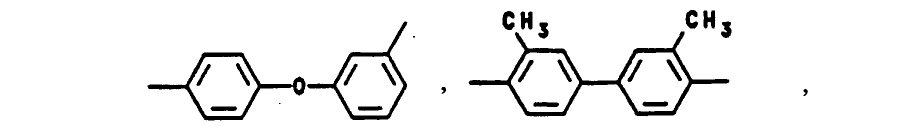

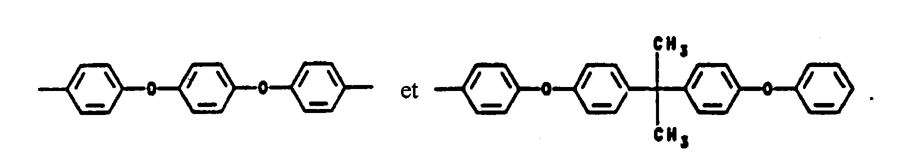

17. Alliage de polymères selon la revendication 14, caractérisé en ce que, dans le copolyamide entièrement aromatique, les unités constitutives A, B et D se trouvent dans des rapports molaires B/A de 0,3 à 0,9 et D/A de 0,1 à 0,7, et (B+D)/A de 0,9 à 1,1.

18. Alliage de polymères selon la revendication 13, caractérisé en ce que la viscosité inhérente des copolyamides utilisés comme constituants de l'alliage, déterminée dans de l'acide sulfurique à 96 % à 25°C, est comprise entre 50 et 1000 cm³/g.

19. Alliage de polymères selon la revendication 3, caractérisé en ce que la masse molaire de la polyvinylpyrrolidone, indiquée comme moyenne en poids, est comprise entre 1000 et 3000000, de préférence entre 20000 et 200000, en particulier entre 40 000 et 100 000.

20. Procédé de préparation d'un alliage de polymères homogène selon au moins l'une des revendications 1 à 13, caractérisé en ce que l'on prépare une solution contenant la polyéthercétone aromatique sulfonée, le polyamide entièrement aromatique et les autres constituants polymères éventuels dans un solvant organique aprotique, puis on élimine le solvant.

21. Procédé selon la revendication 20, caractérisé en ce que l'on prépare le polyamide aromatique par polycondensation dans un solvant organique aprotique et on mélange la solution du polyamide avec une solution contenant la polyéthercétone aromatique sulfonée et éventuellement d'autres constituants polymères dans le même solvant, puis on élimine le solvant.

22. Procédé selon la revendication 20, caractérisé en ce que l'on prépare le polyamide entièrement aromatique par polycondensation dans un solvant organique aprotique, et on dissout la polyéthercétone aromatique sulfonée et éventuellement d'autres constituants polymères dans la solution du polyamide entièrement aromatique.

23. Utilisation de l'alliage de polymères selon la revendication 1 ou 2 pour la préparation de corps moulés, de feuilles ou de fibres.
